# EUROPÄISCHE PATENTSCHRIFT

(11) **EP 0 311 920 B1**
(45) Veröffentlichungstag und Bekanntmachung des Hinweises auf die Patenterteilung: **17.03.1993**
(21) Anmeldenummer: 88116624.3
(22) Anmeldetag: 07.10.1988
(51) Int. Cl.: G11B 23/087

(54) **Kassette mit Verriegelungselement**
Cassette with locking element
Cassette avec élément de verrouillage

(30) Priorität: 15.10.1987 DE 8713865 U
(43) Veröffentlichungstag der Anmeldung: 19.04.1989
(73) Patentinhaber: BASF Aktiengesellschaft, 67063 Ludwigshafen (DE)
(72) Erfinder: Schoettle, Klaus, D-6900 Heidelberg (DE); Gliniorz, Lothar, D-6710 Frankenthal (DE)

(56) Entgegenhaltungen:
- EP-A- 0 088 438
- EP-A- 0 142 897
- EP-A- 0 191 387
- EP-A- 0 255 775
- EP-A- 0 260 023
- DE-A- 3 328 299
- DE-U- 8 713 865
- US-A- 3 900 170

## Beschreibung

Die Erfindung bezieht sich auf eine Kassette für ein Magnetband mit einem Kassettengehäuse, einer eine Öffnung im Kassettengehäuse abdeckenden Verschlußklappe, einer Haltewand im Kassettengehäuse und einem wenigstens teilweise flexiblen Verriegelungselement, das am Kassettengehäuse gelagert ist und zum Freigeben und Verriegeln der Verschlußklappe dient.

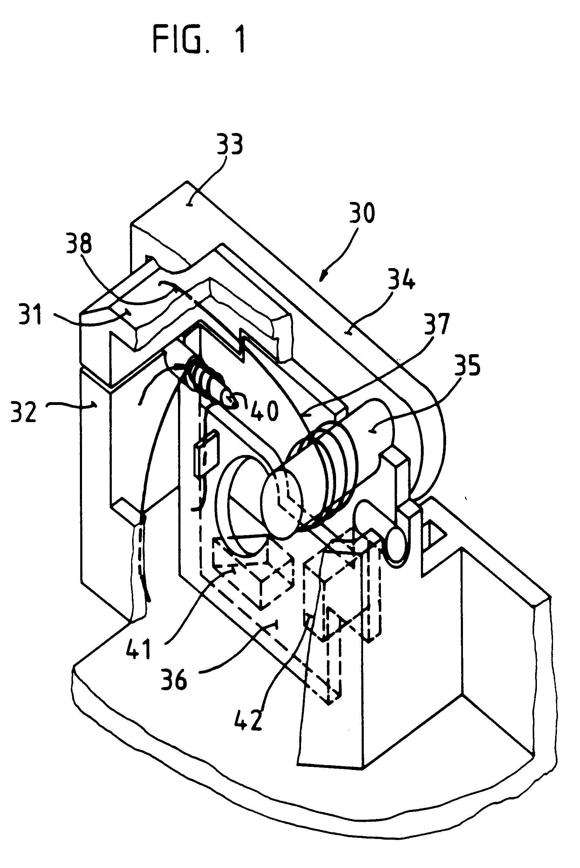

Es ist eine Kassette mit einem Verriegelungselement bekannt, bei dem eine schwenkbar gelagerte Verriegelungsplatte mittels einer daran befestigten, separaten Schwenkfeder gegen das Gehäuse der Kassette abgestützt ist, um eine Vorspannung in Verrieglungsposition zu erzeugen. Ein direkt verriegelnder Vorsprung an der Verriegelungsplatte steht in Verriegelungsposition mit einer Ausnehmung in einer Schwenkklappe der Kassette in Eingriff, und ein anderer Vorsprung an der Verriegelungsplatte wird zum Auslösen der Verriegelungsplatte von außerhalb des Gehäuses betätigt, und damit wird die Verriegelungsplatte gegen die Vorspannung verschwenkt und gibt die Schwenkklappe zum Aufschwenken und Öffnen der Kassette frei. (Vergleiche zu diesem Stand der Technik Figur 1.)

Es ist eine weitere Kassette mit einer Verriegelungsklappe zum selben Zweck aus der US-PS 4 466 583 bekannt, wobei die Schwenkfeder des obigen Standes der Technik durch eine integrierte, angespritzte Kunststoffschwenkfeder ersetzt ist. Auch diese Ausführung einer integrierten Kunststoff-Feder ist nachteilig wegen der komplizierten und aufwendigen Fertigung, bei der aufwendige Werkzeuge notwendig sind, und durch die hervorstehenden Kunststoff-Federn, die die Weiterverarbeitung und Konfektionierung (Zusammenbau) der Kassetten durch Verhaken behindern.

Die Erfindung hat sich daher die Aufgabe gestellt, die Nachteile der bekannten Kassetten mit Verriegelungselementen auszuschalten und deren Herstellung wirtschaftlicher zu machen.

Diese Aufgabe wird erfindungsgemäß mit den Merkmalen der Anspruchs 1 gelöst.

Damit werden durch Betätigung der Riegeleinrichtung je nach Art und Reibungsverhältnissen der Lagereinrichtung Federkräfte mittels des elastisch flexiblen Teils hervorgerufen.

In weiterer Ausbildung sind die Lagereinrichtung und der Halteschlitz in der Haltewand so ausgebildet, daß die Lagereinrichtung im Halteschlitz undrehbar angeordnet ist. Praktisch kann das elastisch flexible Teil an seinen Enden oder können die Lagerelemente selbst mit rechteckigem Querschnitt ausgebildet sein, und die Halteschlitze können wenigstens teilweise eine entsprechend gestreckte Form mit etwa parallelen Seitenrändern aufweisen. Damit wird erreicht, daß die Federkräfte allein durch die Ausbildung und Anordnung des elastisch flexiblen Teils bestimmt werden und von der Art und Ausbildung der Lagereinrichtung unabhängig werden.

Praktisch kann das Verriegelungselement T-Form aufweisen, wobei der Fuß der T-Form die Riegeleinrichtung und am Dach der T-Form der elastisch flexible Teil mit den Lagerelementen an den Enden und der Mittelteil als im wesentlichen starres Verbindungsteil ausgebildet sind.

Dadurch läßt sich das Element äußerst materialsparsam und dennoch funktionsgünstig herstellen.

Ferner können die die Lagerelemente, wenn die Halteschlitze Halbkreisform besitzen, als Kreis- oder Halbkreisscheiben ausgebildet sein, die dezentral an den Enden des elastisch flexiblen Teils angebracht sind.

Es ist ferner jedoch auch möglich, daß das oder die Lagerelemente als Endteile von Abkröpfungen ausgebildet sind, wobei die Ebenen der Endteile im Winkel zur Ebene des elastisch flexiblen Teils angeordnet sind.

Der elastisch flexible Teil läßt sich auch unsymmetrisch zur T-Form an einer Seite ausbilden, sofern dann die andere Lagereinrichtung drehbar angeordnet ist.

Die Erfindung wird anhand von in Zeichnungen dargestellten Ausführungsbeispielen nachfolgend beschrieben.

Es zeigen:
- Figur 1: ein Vorder-Eckteil einer handelsüblichen Videobandkassette mit vorderer Schwenklappe und einer Verriegelungsplatte nach dem Stand der Technik, teilweise herausgebrochen dargestellt,
- Figur 2: ein erstes T-Form-Verriegelungselement mit integrierter Feder für eine erfindungsgemäße Kassette
- Figur 3: ein zweites T-Form-Verriegelungselement mit integrierter Feder und einem Halteschlitz in der Haltewand einer erfindungsgemäßen Kassette
- Figur 4: ein T-Form-Verriegelungselement mit einseitig undrehbarer Lagerung in einer erfindungsgemäßen Kassette.

Figur 1 zeigt einen vorderen Eckteil 30 einer VHS-Cassette bestehend aus oberen und unteren Gehäuseteilen 31, 32, die geeignet miteinander verbunden sind. Zum Schutz des nicht dargestellten Bandes vor Beschädigung dient eine Schwenkklappe 33 mit Seitenwänden 34, auf deren Innenseiten Stifte 35 angespritzt sind, um die die Schwenkklappe verschwenkbar ist. Im unteren Gehäuseteil 31 ist eine schwenkbare Verriegelungsplatte 36 vorgesehen, welche mittels eines Vorsprungs 41, der in eine nicht dargestellte Ausnehmung in der Klappen-Seitenwand 34 eingreift, das Verriegeln der Verriegelungsplatte 36 bewerkstelligt. Die Schwenkklappe 33 mit Seitenwänden 34 ist gegenüber den Gehäuseteilen 31, 32 in Schließstellung vorgespannt mittels einer auf einem Zapfen 35 vorgesehenen Schenkelfeder 37, deren Schenkel 38 an der Unterseite der Schwenkklappe 33 angreift. Die Verriegelungsplatte 36 ist über eine weitere Schwenkfeder 39, die auf einem Lagerzapfen 40 der Verriegelungsplatte 36 angeordnet ist und deren Schenkel sich gegen eine Rippe des Gehäusebodenteils 31 abstützt, in ihrer Verriegelungsstellung vorgespannt. An der Verriegelungsplatte 36 ist auch ein größerer Betätigungsvorsprung 42 vorgesehen, der von außerhalb der Kassette betätigbar ist.

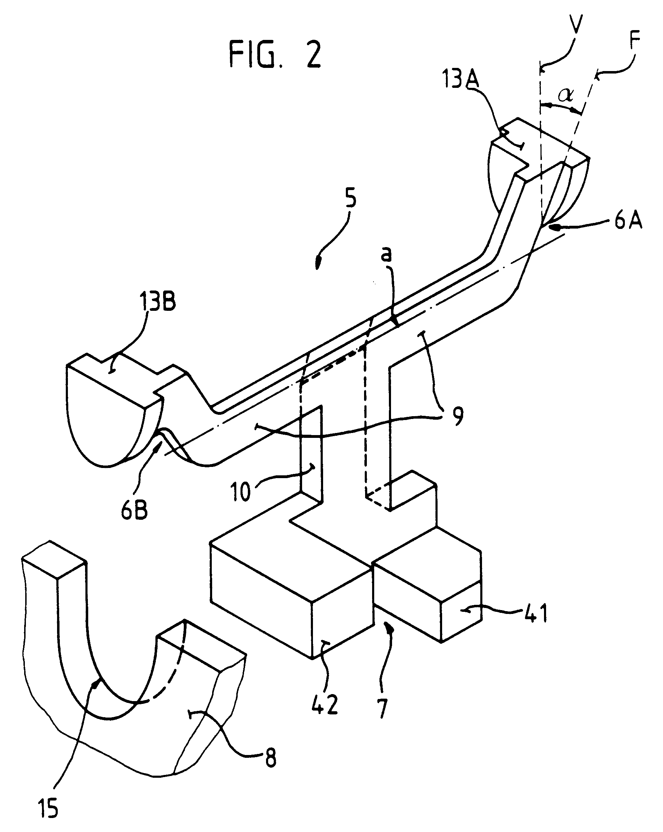

In Figur 2 ist ein Verriegelungselement für eine Kassette gemäß der vorliegenden Erfindung dargestellt, das im wesentlichen T-Form, jedoch leicht nach oben gegabelt ausgebildet, aufweist, am Fuß mit der Riegeleinrichtung 7, gebildet aus Vorsprüngen 41 und 42 (entsprechend den Vorsprüngen 41 und 42 in Figur 1) zur Verriegelung bzw. zur Betätigung, mit einem relativ starren Mittelteil 10 und am Dach mit dem elastisch verformbaren, flexiblen Teil 9, an dessen Enden die Lagerelemente 6A und 6B angebracht sind. Das elastisch flexible Teil 9 ist hier als leicht gabelförmiges, flaches, im Querschnitt rechteckiges Kunststoffteil vorgesehen, je nach Kunststoffmaterialcharakteristik kann das Teil 9 auch plättchenförmig (bei federhärterem Material) oder auch mit anderem Querschnitt ausgebildet sein, solange die erfindungsgemäß vorausgesetzten Funktionen, insbesondere die Federfunktion, des Verriegelungselements 5 erfüllt werden. Der Mittelteil 10 und die Vorsprünge 41 und 42 sind zum Teil 9 vergleichsweise starr ausgebildet.

Die Lagerelemente 6A und 6B sind hier als Halbkreisscheiben 12A und 12B ausgebildet, die an den Schmalseiten der Enden des flachen, elastisch flexiblen Teils 9 angebracht, d.h. im Spritzguß hergestellt sind. Die Halbkreisscheiben 12A, 12B passen in den Halbkreisschlitz 15 im Halteteil 8, das fragmentartig dargestellt ist. Damit ist bereits durch Formschluß die Unverdrehbarkeit der Lagerelemente 6A und 6B gesichert. Es sind auch Vollkreisscheiben oder entsprechend andere Halteschlitze- und Lagerelementeformen wie Mehrfacheckformen usw. denkbar.

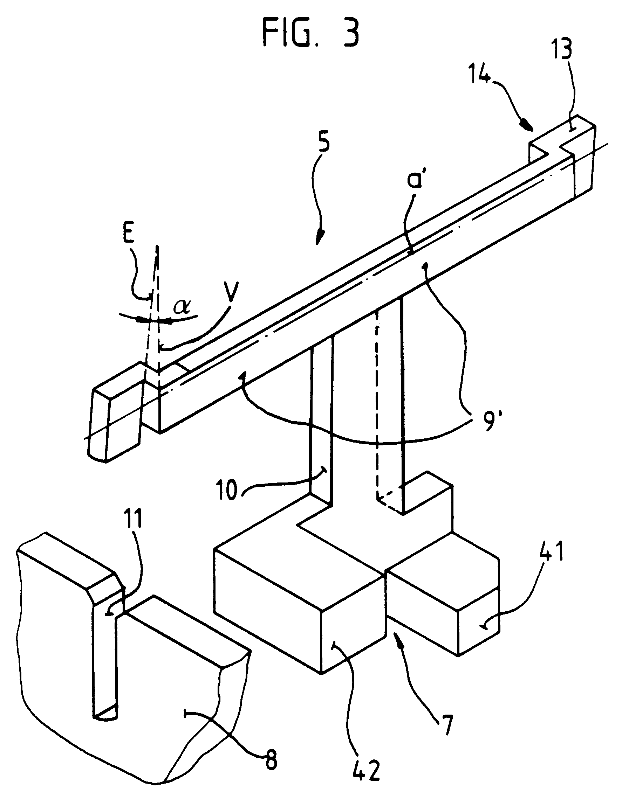

In Figur 3 besitzt der Halteschlitz 11 eine schmale Rechteckform und dementprechend ist die Form der Lagerelemente 6A und 6B angepaßt und besitzt etwa dieselbe Querschnittsform wie das übrige Teil 9', das hier eine ungegabelte T-Form besitzt. Mit einer Abkröpfung 14 und Rechteck-Endteilen 13A und B sind die Lagerelemente 6A und 6B ausgebildet, wodurch wiederum nur durch Formschluß die gewünschte Unverdrehbarkeit erhalten wird.

Als Winkel α ist in allen Ausführungen ein Winkel zwischen der Vertikalen V und den Verbindungskanten bzw. -linien E bzw. F zwischen den Endteilen 12 und 13 und dem elastisch flexiblen Teil 9 bezeichnet. Diese Winkel α werden zum Ausgleich von Fertigungstoleranzen, z.B. bei Verwendung von Polyacetal, im Bereich von ca. 5-10° gewählt, d.h. die Lage der Lagerelemente soll gegenüber dem elastisch, flexiblen Teil 9 in diesem Winkelbereich verdreht sein, jedoch bei unverdrehbarer Lagerung der Lagerelemente. Der Winkel α wird in seiner Lage so gewählt, daß durch die Maßnahme der Verdrehung eine gerichtete Vorspannung im Bereich von 1 bis 5 cN in Richtung der Verriegelungsstellung des Verriegelungselements erhalten wird.

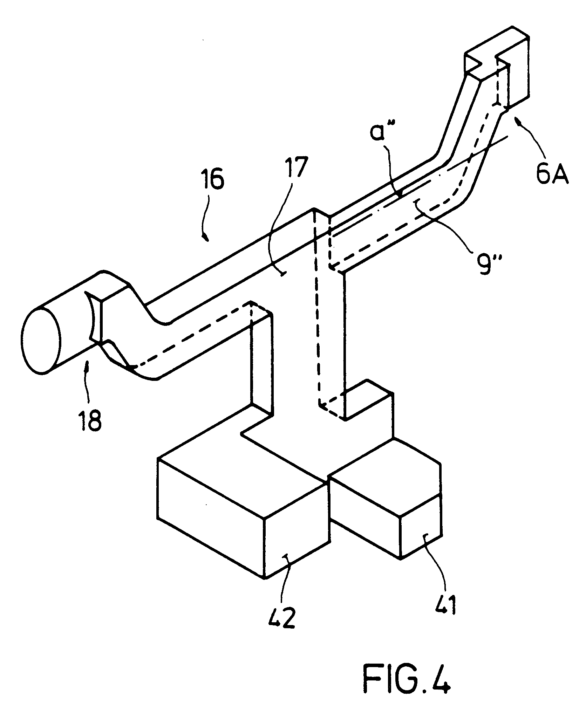

Im Unterschied zu den bisherigen Ausführungen ist das Verriegelungselement 16 in Figur 4 mit einseitig undrehbarer Lagerung entsprechend Figur 2 ausgebildet. Das elastisch flexible Teil 9'' ist dabei einseitig und unsymmetrisch am T-Dach ausgebildet, während der Mittelteil mit dem anderen Seitenteil als starres Teil 18 ausgeführt ist. Die "verkürzte" Schwenkachse ist mit a'' bezeichnet.

Die Funktion des Verriegelungselements 5 (16) bei Betätigung des Vorsprungs 42 ist die folgende: Durch das relativ starre Mittelteil 10 wird die Betätigungskraft auf das elastisch flexible Teil 9, 9' ausgeübt, das mittels der Lagerelemente 6A, 6B jedoch unverdrehbar gehaltert ist, wodurch Biege- und Torsionsfederspannungen im Teil 9, 9' entstehen, die der Betätigungskraft entgegenwirkt. Die Biege- und Torsionsfederspannungen sind durch Formgebung, Art der Einspannung, Materialwahl und Hebelauslegung am Teil 9, 9' einstellbar. Die Schwenkung des Verriegelungselements 5 erfolgt etwa um die Schwenkachse a, a'. Durch die Betätigung des Vorsprungs 42 wird auch der Vorsprung 41 der Riegeleinrichtung 7 außer Eingriff von der Schwenkklappe 33 gebracht, die dadurch zu öffnen ist. Im Fall der Ausführung der Figur 4 ist das elastisch flexible Teil 9'' des Verriegelungselements 16 nur einseitig undrehbar gehalten, so daß sich eine zur T-Form (Teil 9) unsymmetrische Federkrafterzeugung ergibt. Die Verformungs-Schwenkbewegung erfolgt hierbei um die "verkürzte" Achse a.

Als Materialien lassen sich alle Kunststoffe, die im Spritzguß verarbeitbar sind, insbesondere alle Thermoplaste verwenden (z.B. Polyacetal, Polypropylen, ABS usw.).

Das erfindungsgemäße Verriegelungselement hat den einen Vorteil, daß keine zusätzlichen Federn oder Federarme benötigt werden, die die Herstellung der Kassetten unwirtschaftlich machen. Zum anderen ist die "Feder" (Teile 9, 9', 9'') in der Fläche des Verriegelungselements angeordnet und dasselbe deshalb einfach und wirksam herstellbar und ohne zusätzlichen Platzbedarf günstig einbaubar.

Die Verwendung einer solchen Biege- und Torsionsfederanordnung ist auch bei anderen Kassetteneinzelteilen wie z.B. bei der Bremsung oder dem Halten der Spulen, bei Betätigungsschiebern (Öffnungsabdeckungs-Schiebern) vorteilhaft möglich.

## Patentansprüche

1. Kassette für ein Magnetband mit einem Kassettengehäuse, einer eine Öffnung im Kassettengehäuse abdeckenden Verschlußklappe, einer Haltewand im Kassettengehäuse und einem wenigstens teilweise flexiblen Verriegelungselement, das am Kassettengehäuse gelagert ist, und einer Riegeleinrichtung zum Verriegeln und Freigeben der Verschlußklappe, gekennzeichnet durch ein zweiseitig gelagertes Verriegelungselement (5), das eine Lagereinrichtung (6) und unterhalb davon die Riegeleinrichtung (7) aufweist, wobei die Lagereinrichtung (6) in wenigstens einem Halteschlitz (11, 15) mindestens einer Haltewand (8) im Kassettengehäuse gelagert ist, wobei sich die Formen der Lagereinrichtung (6) und des Halteschlitzes (11, 15) derart entsprechen, daß eine Drehung der Lagereinrichtung (6) im Halteschlitz (11, 15) verhindert ist.

2. Kassette nach Anspruch 1, dadurch gekennzeichnet, daß die Riegeleinrichtung (7) unterhalb der Achse der Lagereinrichtung (6) im Abstand davon vorgesehen ist und zur Erzeugung einer Federvorspannung für die Betätigung der Riegeleinrichtung (7) das Verriegelungselement im Bereich der Lagereinrichtung ein elastisch flexibles Teil (9, 9', 9'') aufweist, an dem ein starres Verbindungsteil (10) zur Riegeleinrichtung (7) vorgesehen ist, so daß bei Betätigung der Riegeleinrichtung (7) das elastisch flexible Teil (9, 9', 9'') elastisch verformt wird und die Schwenkbewegung des Verriegelungselements (5) um eine Achse (a, a', a'') zumindest nahe des elastisch flexiblen Teils (9, 9', 9'') erfolgt.

3. Kassette nach Anspruch 1, dadurch gekennzeichnet, daß das Verriegelungselement (5) im wesentlichen eine T-Form aufweist, wobei am Fuß der T-Form die Riegeleinrichtung (7) und am Dach der T-Form das elastisch flexible Teil (9, 9') mit den Lagerelementen (6A, 6B) an den Enden und der Mittelteil (10) als im wesentlichen starres Verbindungsteil ausgebildet ist.

4. Kassette nach Anspruch 2 oder 3, dadurch gekennzeichnet, daß die Lagerelemente (6A, 6B) des Verriegelungselements (5) als Kreis- oder Halbkreisscheiben (12) ausgebildet sind, die dezentral an den Enden des elastisch, flexiblen Teils (9, 9') angebracht sind.

5. Kassette nach Anspruch 3 oder 4, dadurch gekennzeichnet, daß die Lagerelemente (6A, 6B) des Verriegelungselements (5) als Endteile (13) von Abkröpfungen (14) ausgebildet sind, wobei die Verbindungslinien zwischen den Endteilen und dem elastisch flexiblen Teil (9, 9', 9'') im Winkel von 90°-α, insbesondere von zwischen ca. 80 bis 85°, angeordnet sind.

6. Kassette nach Anspruch 5, dadurch gekennzeichnet, daß durch eine verdrehte Anordnung der Lagerelemente (6A, 6B) des Verriegelungselements gegenüber dem elastisch flexiblen Teil (9) eine Vorspannung im Bereich von 1 bis 5 cN erzeugt wird.

7. Kassette nach Anspruch 2 oder 3, dadurch gekennzeichnet, daß das Verriegelungselement (5) im wesentlichen eine T-Form aufweist, wobei am Fuß der T-Form die Riegeleinrichtung (7) und am Dach der T-Form der elastisch flexible Teil (9'') mit einem der Lagerelemente (6A, 6B) vorgesehen ist und das elastisch flexible Teil (9'') einseitig ausgebildet ist, und wobei der Mittelteil mit dem anderen Seitenteil (17) als im wesentlichen starres Verbindungsteil und mit drehbarer Lagereinrichtung (18) ausgebildet ist.

8. Kassette nach einem der Ansprüche 1 bis 7, dadurch gekennzeichnet, daß das elastisch flexible Teil (9, 9', 9'') des Verriegelungselements (5) an mindestens einem seiner Enden mit rechteckförmigem Querschnitt ausgebildet ist (Figur 2), und die Halteschlitze (11) in der Haltewand (8) des Kassettengehäuses wenigstens teilweise eine entsprechend gestreckte Form mit etwa parallelen Seitenwänden aufweisen.

9. Kassette nach einem der Ansprüche 1 bis 7, dadurch gekennzeichnet, daß wenigstens ein Lagerelement (Abkröpfung 14) des Verriegelungselements (5) mit rechteckigem Querschnitt ausgebildet ist (Figur 2), und die Halteschlitze (11) in der Haltewand (8) des Kassettengehäuses wenigstens teilweise eine entsprechend gestreckte Form mit etwa parallelen Seitenwänden aufweisen.

## Claims

1. A cassette for a magnetic tape having a cassette housing, a closure flap covering an opening in the cassette housing, a retaining wall in the cassette housing and an at least partially flexible locking element which is mounted on the cassette housing, and a locking means for locking and releasing the closure flap, comprising a locking element (5) which is mounted on two sides and has a mounting means (6) with the locking means (7) underneath it, the mounting means (6) being mounted in at least one retaining slit (11, 15) of at least one retaining wall (8) in the cassette housing, the shapes of the mounting means (6) and of the retaining slit (11, 15) corresponding to each other in such a way as to prevent the mounting means (6) turning in the retaining slit (11, 15).

2. A cassette as claimed in claim 1, wherein the locking means (7) is provided underneath the axis of the mounting means (6) at a distance therefrom and the locking element has in the region of the mounting means a resiliently flexible part (9, 9',9'') to produce a spring prestress for the actuation of the locking means (7), on which resiliently flexible part there is a provided a rigid connecting part (10) to the locking means (7), so that, when the locking means (7) is actuated, the resiliently flexible part (9, 9', 9'') is resiliently deformed and the pivoting movement of the locking element (5) about an axis (a, a', a'') takes place at least close to the resiliently flexible part (9, 9', 9'').

3. A cassette as claimed in claim 1, wherein the locking element (5) has substantially a T shape, the locking means (7) being formed at the base of the T shape and the resiliently flexible part (9, 9') with the mounting elements (6A, 6B) at the ends being formed at the top of the T shape and the middle part (10) taking the form of a substantially rigid connecting part.

4. A cassette as claimed in claim 2 or 3, wherein the mounting elements (6A, 6B) of the locking element (5) take the form of circular or semicircular disks (12) which are attached decentrally at the ends of the resiliently flexible part (9, 9').

5. A cassette as claimed in claim 3 or 4, wherein the mounting elements (6A, 6B) of the locking element (5) take the form of end parts (13) of angled pieces (14), the joining lines between the end parts and the resiliently flexible part (9, 9', 9'') being arranged at an angle of 90° - α, in particular of from about 80 to 85°.

6. A cassette as claimed in claim 5, wherein, due to a twisted arrangement of the mounting elements (6A, 6B) of the locking element relative to the resiliently flexible part (9), a prestress in the range from 1 to 5 cN is produced.

7. A cassette as claimed in claim 2 or 3, wherein the locking element (5) has substantially a T shape, the locking means (7) being provided at the base of the T shape and the resiliently flexible part (9'') with one of the mounting elements (6A, 6B) being provided at the top of the T shape and the resiliently flexible part (9'') being formed on one side, and the middle part being designed with the other side part (17) as a substantially rigid connecting part and with a mounting means (18) which can turn.

8. A cassette as claimed in any of claims 1 to 7, wherein the resiliently flexible part (9, 9', 9'') of the locking element (5) is formed on at least one of its ends in rectangular cross section (Figure 2), and the retaining slits (11) in the retaining wall (8) of the cassette housing have at least partially a correspondingly elongate shape with approximately parallel side walls.

9. A cassette as claimed in any of claims 1 to 7, wherein at least one mounting element (angled piece 14) of the locking element (5) is formed in rectangular cross section (Figure 2), and the retaining slits (11) in the retaining wall (8) of the cassette housing have at least partially a correspondingly elongate shape with approximately parallel side walls.

## Revendications

1. Cassette pour bande magnétique comportant un boîtier, un volet obturateur couvrant une ouverture de ce boîtier, une paroi de support située dans le boîtier, un élément de verrouillage au moins en partie flexible monté sur le boîter et un dispositif verrou pour le verrouillage et le déverrouillage du volet obturateur, caractérisée par un élément de verrouillage (5) appuyé de deux côtés qui présente un dispositif d'appui (6) et au-dessous de celui-ci le dispositif verrou (7), le dispositif d'appui (6) étant appuyé dans au moins une fente de support (11, 15) d'au moins une paroi de support (8) située dans le boîtier, les formes du dispositif d'appui (6) et de la fente de support (11, 15) se correspondant de façon telle que le dispositif d'appui (6) ne puisse pas tourner dans la fente de support (11, 15).

2. Cassette selon la revendication 1, caractérisée par le fait que le dispositif verrou (7) est prévu au-dessous de l'axe du dispositif d'appui (6) à distance de celui-ci, et, pour la production d'une précontrainte élastique pour l'actionnement du dispositif verrou (7), l'élément de verrouillage présente, dans la zone du dispositif d'appui, une partie flexible élastiquement (9, 9', 9'') sur laquelle est prévue une partie rigide (10) de jonction au dispositif verrou (7), de sorte qu'à l'actionnement du dispositif verrou (7) la partie flexible élastiquement (9, 9', 9'') est déformée élastiquement et le basculement de l'élément de verrouillage (5) a lieu autour d'un axe (a, a', a'') au moins voisin de la partie flexible élastiquement (9, 9', 9'').

3. Cassette selon la revendication 1, caractérisée par le fait que l'élément de verrouillage (5) a de manière générale une forme en T, le dispositif verrou (7) étant formé au pied du T et la partie flexible élastiquement (9, 9') étant formé au toit du T avec les éléments d'appui (6A, 6B) aux extrémités, et la partie médiane (10) contituant une partie de jonction pratiquement rigide.

4. Cassette selon l'une des revendications 2 et 3, caractérisée par le fait que les éléments d'appui (6A, 6B) de l'élément de verrouillage (5) sont constitués de plaques circulaires ou semi-circulaires (12) qui sont placées décentrées aux extrémités de la partie flexible élastiquement (9, 9').

5. Cassette selon l'une des revendications 3 et 4, caractérisée par le fait que les éléments d'appui (6A, 6B) de l'élément de verrouillage (5) sont constitués de parties d'extrémité (13) de crosses (14), les lignes de jonction entre ces parties d'extrémité et la partie flexible élastiquement (9, 9', 9'') faisant un angle de 90 degrés -α, en particulier compris entre environ 80 et 85 degrés.

6. Cassette selon la revendication 5, caractérisée par le fait qu'une disposition des éléments d'appui (6A, 6B) de l'élément de verrouillage gauche par rapport à la partie flexible élastiquement (9) produit une précontrainte de 1 à 5 cN.

7. Cassette selon l'une des revendications 2 et 3, caractérisée par le fait que l'élément de verrouillage (5) a de manière générale une forme en T, au pied du T étant prévu le dispositif verrou (7) et au toit du T étant prévue la partie flexible élastiquement (9'') avec un des éléments d'appui (6A, 6B) et la partie flexible élastiquement (9'') étant faite d'un côté, et la partie médiane étant réalisée avec l'autre partie latérale (17) sous forme de partie de jonction pratiquement rigide et avec dispositif d'appui tournant (18).

8. Cassette selon l'une des revendications 1 à 7, caractérisée par le fait que la partie flexible élastiquement (9, 9', 9'') de l'élément de verrouillage (5) présente, à au moins une de ses extrémités, une section rectangulaire (fig. 2) et les fentes de support (11) faites dans la paroi de support (8) du boîtier de la cassette ont au moins en partie une forme allongée correspondante, avec parois latérales à peu près parallèles.

9. Cassette selon l'une des revendications 1 à 7, caractérisée par le fait qu'au moins un élément d'appui (crosse 14) de l'élément de verrouillage (5) est de section rectangulaire (fig. 2) et les fentes de support (11) faites dans la paroi de support (8) du boîtier de la cassette ont au moins en partie une forme allongée correspondante, avec parois latérales à peu près parallèles.
